# EUROPÄISCHE PATENTSCHRIFT

(11) **EP 2 846 061 B1**
(45) Veröffentlichungstag und Bekanntmachung des Hinweises auf die Patenterteilung: **13.09.2017**
(21) Anmeldenummer: 14182279.1
(22) Anmeldetag: 26.08.2014
(51) Int. Cl.: F16F 9/05

(54) **Luftfeder und Tauchkolben für Luftfeder**
Air spring and plunger for air spring
Coussin d'air et piston plongeur pour coussin d'air

(30) Priorität: 10.09.2013 DE 102013218024
(43) Veröffentlichungstag der Anmeldung: 11.03.2015
(73) Patentinhaber: SAF-HOLLAND GmbH, 63856 Bessenbach (DE)
(72) Erfinder: Wallmeier, Stefan, 63773 Goldbach (DE); Büttner, Josef, 63857 Waldaschaff (DE)
(74) Vertreter: Müller Schupfner & Partner Patent- und Rechtsanwaltspartnerschaft mbB

(56) Entgegenhaltungen:
- EP-A2- 1 122 459
- DE-A1- 19 733 281
- DE-A1- 19 855 229
- DE-A1-102004 012 881
- DE-A1-102007 034 362
- DE-A1-102011 114 379
- US-A- 2 916 298

## Beschreibung

Die Erfindung betrifft eine Luftfeder sowie einen Tauchkolben für eine Luftfeder.

Luftfedern finden beispielsweise bei Nutzfahrzeugen Anwendung, um einen Fahrzeugrahmen federnd gegenüber einem Achselement des Fahrzeugs zu lagern. Bei bekannten Luftfederungen ist das Achselement des Fahrzeugs über einen Längslenker schwenkbar am Fahrzeugrahmen angelenkt und über die Luftfeder am Fahrzeugrahmen abgestützt. Eine Luftfeder umfasst üblicherweise einen Luftbalg sowie einen mit dem Luftbalg gekoppelten Tauchkolben. Der Luftbalg ist üblicherweise mit dem Fahrzeugrahmen und der Tauchkolben mit dem Achselement verbunden. Zur Bereitstellung einer federnden Lagerung des Fahrzeugrahmens gegenüber dem Achselement ist der Tauchkolben relativ zu dem Luftbalg bewegbar. Der Luftbalg ist hierzu an einem oberen Anbindungsbereich des Tauchkolbens befestigt und kann bei einer Einfederungsbewegung über eine Mantelfläche des Tauchkolbens abrollen. Der Tauchkolben ist üblicherweise als Hohlkörper ausgebildet.

Insbesondere bei Nutzfahrzeugen ergibt sich die Problematik, dass bei einem Anheben des Fahrzeugs, beispielsweise bei einer Verladung per Kran, die Achse des Fahrzeugs vom Boden abgehoben wird und das Gewicht der Achse an der Luftfeder hängt. Um die Luftfeder hierbei zu entlasten, ist es beispielsweise bekannt, Fangseile vorzusehen, welche das Gewicht der Achse aufnehmen. Gleichwohl wird der Luftbalg der Luftfeder jedoch bei einem Anheben des Fahrzeugs gestreckt, wodurch der Druck im Luftbalg absinkt. Insbesondere bei einem Anheben ausgehend von einem entlüfteten Zustand des Luftbalgs, oder wenn durch das Anheben eine Entlüftung durch ein Niveauregelventil erfolgt, kann in dem Luftbalg beim Anheben des Fahrzeugs ein Unterdruck entstehen. Dies kann zu einem Einfallen des Luftbalgs und in der Folge bei einem erneuten Aufsetzen des Fahrzeugs auf den Boden zu einem ungleichmäßigen Abrollen über den Tauchkolben führen, wodurch der Luftbalg beschädigt werden kann. Um dies zu vermeiden, ist es bekannt, ein Belüftungsventil vorzusehen, über welches Luft in den Luftbalg einströmen kann, so dass ein Unterdruck in dem Luftbalg verhindert wird. Das Belüftungsventil kann beispielsweise im Anbindungsbereich des Tauchkolbens angeordnet sein, so dass die Luft über den Innenraum des Tauchkolbens in den Luftbalg einströmen kann.

Eine Luftfeder mit einem Belüftungsventil für den Luftbalg ist beispielsweise aus der DE 10 2010 040 980 A1 bekannt.

Die DE 197 33 281 A1 betrifft eine Luftfeder für Kraftfahrzeuge mit einem zwischen dem Fahrzeugrahmen und einem mit der Fahrzeugachse verbundenen Bauteil angeordneten Luftbalg, dessen Inneres beim Anheben des Kraftfahrzeuges für eine Verladung durch ein Ventil mit der Außenluft verbunden wird.

Die DE 198 55 229 A1 betrifft eine Federung mit wenigstens einem Federbalg, der zwischen zwei mit dem Fahrzeugrahmen in Verbindung stehenden Endstücken zwischengesetzt ist, und einer Membranpumpe, die mit Rückschlagventilen versehen ist.

Die DE 10 2011 114 379 A1 und die EP 1 122 459 A2 betreffen Luftfedern, die in einem Fahrzeug zum Absorbieren von Stößen von außen installiert sind.

Der Erfindung liegt die Aufgabe zugrunde, eine Luftfeder und einen Tauchkolben für eine Luftfeder bereitzustellen, welche eine besonders hohe Betriebssicherheit aufweisen und insbesondere eine zuverlässige Belüftung des Luftbalgs bei einem Anheben des Fahrzeugs gewährleisten.

Die Aufgabe wird erfindungsgemäß durch eine Luftfeder mit den Merkmalen des Anspruchs 1 gelöst. Bevorzugte Ausgestaltungen sind in den abhängigen Ansprüchen sowie der Beschreibung, insbesondere im Zusammenhang mit den beiliegenden Figuren, angegeben.

Die Luftfeder umfasst erfindungsgemäß einen Luftbalg mit einem mit Druckluft befüllbaren Balginnenraum und einen Tauchkolben, welcher mit dem Luftbalg gekoppelt ist und einen Mantelkörper aufweist, welcher eine Abrollfläche für den Luftbalg bildet. Der Tauchkolben ist als Hohlkörper ausgeführt und weist einen Kolbeninnenraum auf. Es ist ein Ventil zum Belüften des Balginnenraums vorgesehen, durch welches der Balginnenraum mit dem Kolbeninnenraum verbindbar, insbesondere fluidisch verbindbar bzw. in Fluidverbindung bringbar ist. Erfindungsgemäß weist der Tauchkolben mindestens eine Belüftungsöffnung auf, welche in dem Mantelkörper des Tauchkolbens angeordnet ist und über welche der Kolbeninnenraum mit der Umgebung fluidisch verbindbar bzw. in Fluidverbindung bringbar ist.

Der Tauchkolben umfasst erfindungsgemäß einen Mantelkörper, welcher eine Abrollfläche für einen Luftbalg bildet, wobei der Tauchkolben als Hohlkörper ausgeführt ist und einen Kolbeninnenraum aufweist. Erfindungsgemäß ist mindestens eine Belüftungsöffnung vorgesehen, welche in dem Mantelkörper des Tauchkolbens angeordnet ist und den Kolbeninnenraum mit der Umgebung insbesondere fluidisch verbindet bzw. in Fluidverbindung bringt.

Das Ventil zum Belüften des Innenraums des Luftbalgs gewährleistet, dass der Druck im Innenraum des Luftbalgs, insbesondere aufgrund eines Anhebens des Fahrzeugs vom Boden, nicht unter einen vorbestimmten Druck absinkt, welcher insbesondere unterhalb eines Umgebungsdrucks liegt. Hierdurch wird verhindert, dass sich der Luftbalg beim Anheben des Fahrzeugs undefiniert einfaltet oder verkippt. Bei einem erneuten Aufsetzen des Fahrzeugs auf den Boden ist ein betriebsgemäßes Abrollen des Luftbalgs auf der Mantel- beziehungsweise Abrollfläche des Tauchkolbens auch ohne eine zusätzliche Druckbeaufschlagung mittels einer Druckluftquelle gewährleistet. Eine Beschädigung des Luftbalgs aufgrund einer ungewünschten Abrollbewegung beim Aufsetzen des Fahrzeugs kann somit zuverlässig verhindert werden.

Die Erfindung geht von einer Luftfeder aus, welche zur Belüftung des Luftbalgs ein Ventil oder Belüftungsventil aufweist, das im Angrenzungsbereich zwischen dem Innenraum des Luftbalgs und dem Innenraum des Tauchkolbens angeordnet ist, so dass eine Belüftung des Luftbalgs über den Innenraum des Tauchkolbens erfolgt. Auf diese Weise ist das Ventil durch den Tauchkolben vor äußeren Einwirkungen weitgehend geschützt. Vorzugsweise ist das Ventil zudem relativ zum Tauchkolben stationär angeordnet, so dass unabhängig vom Federungszustand des Luftbalgs stets eine definierte Position des Ventils vorliegt. Besonders bevorzugt befindet sich das Ventil an einer Stirnfläche des Tauchkolbens, welche an den Innenraum des Luftbalgs angrenzt. Das im Grenzbereich zwischen Balginnenraum und Kolbeninnenraum angeordnete Ventil gewährleistet eine besonders zuverlässige Belüftung des Balginnenraums und somit eine zuverlässige Vermeidung einer Beschädigung des Luftbalgs.

Das Belüftungsventil ist vorzugsweise als Rückschlagventil ausgeführt und wird durch einen Überdruck im Luftbalg in eine Schließstellung und durch einen Unterdruck im Luftbalg in eine Öffnungsstellung gebracht. Sinkt der Innendruck also um einen vorgegebenen Betrag (beispielsweise 0,1 bar) unter den Umgebungsdruck, so öffnet sich das Ventil und Luft kann über den Innenraum des Tauchkolbens in den Innenraum des Luftbalgs einströmen. Liegt der Innendruck über dem Umgebungsdruck, so ist das Ventil geschlossen.

Ein erster Grundgedanke der Erfindung kann darin gesehen werden, an dem Tauchkolben der Luftfeder gezielt ein oder mehrere Belüftungslöcher vorzusehen, durch welche Luft von der Umgebung in einen Innenraum des Tauchkolbens einströmen kann. Das mindestens eine Belüftungsloch ist erfindungsgemäß in einem Mantel- oder Umfangsbereich des Tauchkolbens angeordnet. Dieser erstreckt sich um eine Längsachse des Tauchkolbens, welche eine zentrale Einfederachse der Luftfeder bildet. Der Mantelkörper des Tauchkolbens weist eine äußere Mantelfläche auf, welche zumindest teilweise eine Abrollfläche für den Luftbalg bildet, entlang welcher der an dem Tauchkolben befestigte Luftbalg bei einer Einfederungsbewegung abrollt. In einem Betriebszustand der Luftfeder, in welchem die Luftfeder durch das Fahrzeuggewicht belastet ist, liegt der Luftbalg an der Mantelfläche des Tauchkolbens an, wobei abhängig von der Höhe der Belastung und vom Federungszustand ein größerer oder ein kleinerer Teil der Mantelfläche von dem Luftbalg abgedeckt ist. In einem entlasteten Zustand gibt der Luftbalg die Mantelfläche zumindest teilweise, vorzugsweise mehrheitlich, gegebenenfalls auch vollständig, frei. Durch das im Bereich der Abrollfläche angeordnete Belüftungsloch kann eine gezielte Belüftung erfolgen, wenn das Belüftungsloch von dem Luftbalg freigegeben ist. Zudem ist das Belüftungsloch durch die Anordnung im Mantelabschnitt des Tauchkolbens - und somit auch das Ventil - weitgehend vor Verschmutzungen oder Vereisung geschützt, so dass eine besonders zuverlässige Belüftung erreicht werden kann.

Die mindestens eine Belüftungsöffnung ist vorzugsweise als Bohrung oder Ausstanzung in dem im Übrigen vorzugsweise geschlossenen Mantelkörper beziehungsweise Kolbenteil des Tauchkolbens ausgeführt. Eine Längsachse des Belüftungslochs, entlang welcher die Luft durch das Belüftungsloch strömt, erstreckt sich vorzugsweise quer zur Einfederachse. Die Belüftungsöffnung ist vorzugsweise rund, insbesondere kreisrund geformt.

Erfindungsgemäß ist die mindestens eine Belüftungsöffnung in einem Bereich des Mantelkörpers angeordnet, welcher in einem belasteten Zustand der Luftfeder von dem Luftbalg überdeckt ist, so dass die Belüftungsöffnung insbesondere während eines Fahrbetriebs des Fahrzeugs geschlossen ist. Die Belüftungsöffnung ist vorzugsweise in einem durch den Luftbalg abdeckbaren Bereich angeordnet. Unter einem belasteten Zustand oder einem Fahrbetriebszustand kann insbesondere ein stationärer Zustand der Luftfeder verstanden werden, in welchem die Luftfeder betriebsgemäß durch ein Fahrzeug belastet ist. Die Belüftungsöffnung ist also in einem Zustand, wenn das Fahrzeug auf einer Bodenfläche aufgestellt ist, durch den an der Mantelfläche anliegenden Luftbalg verschlossen und somit zuverlässig vor Verschmutzungen geschützt. Besonders bevorzugt ist es, dass die Belüftungsöffnung so angeordnet ist, dass sie in sämtlichen betriebsgemäßen Zuständen oder Fahrbetriebszuständen, also auch in einem Zustand, in dem die Luftfeder in einer Fahrbetriebssituation ausgefedert ist, durch den Luftbalg überdeckt ist. Auf diese Weise bleibt die Belüftungsöffnung auch bei einer betriebsgemäßen Ausfederbewegung von dem Luftbalg abgedeckt und somit verschlossen. Die Belüftungsöffnung wird vorzugsweise erst dann freigegeben, wenn die Luftfeder durch Anheben des Fahrzeugs von der Bodenfläche entlastet wird. Vorzugsweise ist ein dem Luftbalg abgewandter Mantelabschnitt geschlossen, also ohne Belüftungsöffnungen, ausgeführt. Die Länge des geschlossenen Mantelbereichs beträgt vorzugsweise mindestens 20%, insbesondere mindestens 30%, besonders bevorzugt mindestens 40%, der - in Ein-/Ausfederrichtung gesehenen - Länge des Kolbenmantels und/oder der Länge des Tauchkolbens. Sofern mehrere Belüftungsöffnungen vorgesehen sind, sind vorzugsweise sämtliche Belüftungsöffnungen in dem durch den Luftbalg abdeckbaren Bereich der Abrollfläche angeordnet.

Des Weiteren ist es erfindungsgemäß bevorzugt, dass die mindestens eine Belüftungsöffnung in einem Bereich des Mantelkörpers angeordnet ist, welcher in einem entlasteten Zustand der Luftfeder von dem Luftbalg freigegeben ist. Dies ermöglicht eine gezielte Belüftung, wenn die Luftfeder entlastet ist, insbesondere durch Anheben des Fahrzeugs. Die Belüftungsöffnung befindet sich vorzugsweise in einem Bereich des Mantelkörpers, welcher abhängig vom Betriebszustand der Luftfeder durch den Luftbalg abdeckbar und freigebbar ist.

Vorzugsweise ist eine Mehrzahl von Belüftungsöffnungen vorgesehen. Die Belüftungsöffnungen können dementsprechend vergleichsweise klein dimensioniert sein, so dass sich der Luftbalg beim Andrücken an die Mantelfläche möglichst wenig in die Belüftungsöffnungen hineindrückt und verformt. Hierzu weisen die Belüftungsöffnungen vorzugsweise einen Durchmesser von maximal 10 mm, besonders bevorzugt von maximal 5 mm auf. Die Belüftungsöffnungen sind vorzugsweise in einer Umfangsrichtung und/oder einer Längsrichtung des Tauchkolbens angeordnet. In einer bevorzugten Ausgestaltung sind mindestens zwei Belüftungsöffnungen vorgesehen, welche an unterschiedlichen axialen Abschnitten des Tauchkolbens angeordnet sind, so dass die freiliegende Gesamtbelüftungsfläche mit einer zunehmenden Ausfederungsbewegung größer wird.

Erfindungsgemäß ist es bevorzugt, dass die Belüftungsöffnungen in einer Ebene quer zur Längsrichtung und/oder in Längsrichtung übereinander und/oder spiralförmig und/oder stufenweise entlang des Mantelkörpers angeordnet sind. Vorzugweise sind die Belüftungsöffnungen sowohl in Längsrichtung als auch in Umfangsrichtung verteilt in dem Mantelkörper angeordnet, so dass eine zuverlässige Belüftung aus unterschiedlichen Richtungen erfolgen kann.

Eine Vielzahl von Öffnungen lässt sich auf einfache Weise dadurch realisieren, dass der Tauchkolben einen gitterförmigen Bereich aufweist, durch welchen eine Mehrzahl von Belüftungsöffnungen gebildet ist. Der gitterförmige Bereich zeichnet sich insbesondere dadurch aus, dass der Abstand zwischen einzelnen Belüftungsöffnungen gering ist und insbesondere maximal dem Durchmesser der Belüftungsöffnungen entspricht. Der Tauchkolben kann mehrere gitterförmige Bereiche aufweisen, welche in Längsrichtung und/oder in Umfangsrichtung verteilt angeordnet sind. Durch die auf diese Weise gebildeten Lüftungsbereiche mit jeweils mehreren einzelnen Belüftungsöffnungen lässt sich eine besonders zuverlässige Belüftung bei unterschiedlichen Einfederungszuständen erreichen.

Vorzugsweise ist das Ventil zur Belüftung des Balginnenraums an einem dem Luftbalg zugewandten Ende des Tauchkolbens angeordnet. Das Ventil ist vorzugsweise an einem starren Stirnbereich des Tauchkolbens oder einer Befestigungseinrichtung montiert, welche zur Befestigung des Luftbalgs am Tauchkolben vorgesehen ist. Bei der Befestigungseinrichtung kann es sich beispielsweise um ein Klemmelement handeln, welches zum Festlegen des Luftbalgs an dem Tauchkolben vorgesehen ist. Das fest mit dem Tauchkolben verbundene Ventil hat unabhängig vom Federungszustand des Luftbalgs eine definierte Position und gewährleistet daher ein zuverlässiges Einströmen von Luft in den Balginnenraum. Zudem ist das in den Kolbeninnenraum mündende Ventil durch den Tauchkolben vor äußeren Einwirkungen und Verschmutzungen weitgehend geschützt.

Der untere Stirnbereich des Tauchkolbens, also ein dem Luftbalg gegenüberliegendes unteres Ende des Tauchkolbens, kann geöffnet sein bzw. eine Öffnung aufweisen. Vorzugsweise umgibt der Mantelkörper des Tauchkolbens die Öffnung bzw. bildet eine ringförmige Umgrenzung der Öffnung.

Für eine gezielte Belüftung, insbesondere ausschließlich im entlasteten Zustand der Luftfeder, ist ein dem Luftbalg gegenüberliegendes Ende des Tauchkolbens vorzugsweise verschlossen. Die Belüftung des Tauchkolbens erfolgt somit ausschließlich oder zumindest weitgehend über die in dem Mantelabschnitt des Tauchkolbens angeordneten Belüftungsöffnungen. Im eingefederten Zustand der Luftfeder beziehungsweise in ihrem betriebsgemäß belasteten Zustand ist der Kolbeninnenraum zur Umgebung hin abgeschlossen. Der geschlossene Bodenbereich des Tauchkolbens erhöht zudem die Stabilität des Tauchkolbens und ermöglicht eine stabile Anbindung des Tauchkolbens an den entsprechenden Fahrwerk- oder Fahrzeugteil, insbesondere die Achse des zu federnden Fahrzeugs. Das an den Innenraum des Tauchkolbens angrenzende Belüftungsventil ist durch den im betriebsgemäßen, also belasteten Zustand vollständig oder zumindest weitgehend verschlossenen Kolbeninnenraum zuverlässig vor Verschmutzungen geschützt.

Eine Belüftung auch in einem eingefederten beziehungsweise belasteten Zustand der Luftfeder bei gleichwohl gutem Schutz der Belüftungsöffnungen und/oder des Ventils vor Verschmutzungen kann dadurch erzielt werden, dass der Mantelkörper zumindest in einem axialen Teilabschnitt eine Abflachung und/oder Einwölbung aufweist. Die Abflachung und/oder Einwölbung kann sich somit in axialer Richtung, d. h. entlang der Ein- und Ausfederrichtung erstrecken. Die Größe und/oder Form der Abflachung beziehungsweise Einwölbung ist vorzugsweise derart an die Steifigkeit des Luftbalgs angepasst, dass ein vollständiges Anliegen des Luftbalgs an die Mantelfläche im Bereich der Abflachung und/oder Einwölbung verhindert wird. Somit wird im Bereich der Abflachung beziehungsweise Einwölbung ein Kanal zwischen Kolbenmantel und Luftbalg gebildet, durch welchen Luft strömen kann. Die Belüftungsöffnung ist vorzugsweise im Bereich der Abflachung und/oder Einwölbung angeordnet, so dass Luft durch den im Bereich der Abflachung und/oder Einwölbung gebildeten Kanal zwischen Mantelfläche und Luftbalg von der Umgebung in den Tauchkolbeninnenraum einströmen kann. Die Abflachung und/oder Einwölbung befindet sich vorzugsweise ausschließlich in einem dem Luftbalg zugewandten axialen Abschnitt des Tauchkolbens, während ein dem Luftbalg abgewandter axialer Abschnitt vorzugsweise eine gleichmäßige Krümmung, insbesondere einen kreisrunden Querschnitt, aufweist. Auf diese Weise kann eine gute Stabilität des Tauchkolbens erreicht werden.

Vorzugsweise ist die Mantelaußenfläche des Tauchkolbens zur Ausbildung des Kanals teilweise konkav geformt. Hierdurch wird zuverlässig ein sich zweckmäßigerweise in axialer Richtung, d. h. entlang der Ein- und Ausfederrichtung erstreckender Kanal zwischen dem Mantelkörper des Tauchkolbens und dem flexiblen Balgkörper gebildet. Zur Erhöhung der Stabilität des Tauchkolbens kann im Inneren ein kegel- und/oder zylinderförmiges Element angeordnet sein, welches sich um die zentrale Längsachse erstreckt und gegebenenfalls Durchbrechungen für einen Luftdurchtritt aufweisen kann.

Die im Zusammenhang mit der Luftfeder beschriebenen Merkmale geltend entsprechend für den Tauchkolben in Alleinstellung. Der Tauchkolben ist insbesondere für eine erfindungsgemäße Luftfeder vorgesehen.

Die Erfindung wird nachfolgend anhand von bevorzugten Ausführungsformen, welche in den beiliegenden Figuren schematisch dargestellt sind, weiter beschrieben. In den Figuren zeigt:
- Fig. 1:: eine teilweise geschnittene Ansicht einer erfindungsgemäßen Luftfeder;
- Fig. 2:: unterschiedliche Anordnungen der Belüftungsöffnungen in der Mantelfläche eines erfindungsgemäßen Tauchkolbens;
- Fig. 3:: einen Querschnitt einer Ausführungsform eines erfindungsgemäßen Tauchkolbens;
- Fig. 4:: einen weiteren Querschnitt einer Ausführungsform eines erfindungsgemäßen Tauchkolbens.

Gleiche oder gleich wirkende Elemente sind in sämtlichen Figuren mit denselben Bezugszeichen gekennzeichnet. Die anhand der einzelnen Figuren beschriebenen Merkmale können auch miteinander kombiniert werden.

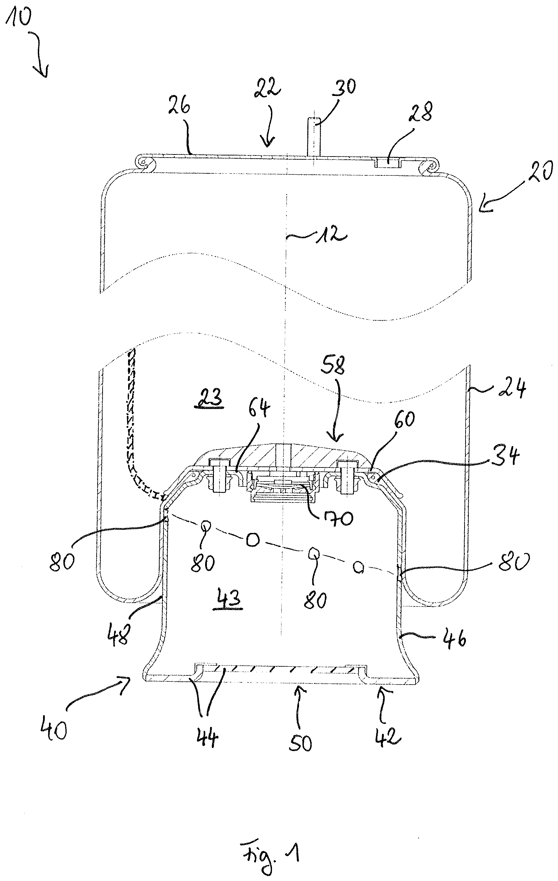

Fig. 1 zeigt einen Längsschnitt einer Ausführungsform einer erfindungsgemäßen Luftfeder 10, welche insbesondere für ein Fahrzeug, vorzugsweise ein Nutzfahrzeug, vorgesehen ist. Die Luftfeder 10 umfasst einen Luftfederbalg beziehungsweise Luftbalg 20 und einen mit dem Luftbalg 20 gekoppelten Tauchkolben 40.

Der Luftbalg 20 ist insbesondere zum Koppeln mit einem Aufbau oder Rahmen des zu federnden Fahrzeugs vorgesehen und weist dementsprechend an seinem oberen Ende einen Anbindungsbereich 22 für den Fahrzeugaufbau beziehungsweise Fahrzeugrahmen auf. Der Tauchkolben 40 ist insbesondere zum Koppeln mit einem Achselement des Fahrzeugs vorgesehen und umfasst dementsprechend an seinem unteren Ende einen Anbindungsbereich 42 für das Achselement.

Der Luftbalg 20 umfasst einen verformbaren beziehungsweise flexiblen, vorzugsweise im Wesentlichen zylinderförmigen Balgkörper 24, welcher am aufbauseitigen Ende mit einem vorzugsweise starren Deckel 26 verschlossen ist. An dem Deckel 26 ist ein Druckluftanschluss 28 ausgebildet, über welchen ein Innenraum des Balgkörpers 24, welcher als Balginnenraum 23 bezeichnet ist, mit Druckluft befüllt werden kann. Ferner ist an dem Deckel 26 ein Befestigungselement 30 zum Befestigen des Luftbalgs 20 am Fahrzeugrahmen angeordnet, welches beispielsweise einen Gewindebolzen mit einer nicht dargestellten Gewindemutter umfassen kann.

Der Tauchkolben 40 umfasst einen Mantelkörper 46, welcher sich ringförmig um eine zentrale Einfederungsachse 12 der Luftfeder 10 erstreckt, und hat insgesamt eine im Wesentlichen zylindrische und/oder konische Form. Eine äußere Mantelfläche 48 des Mantelkörpers 46 bildet einen Abrollbereich für den Luftbalg 20, entlang welcher der Luftbalg 20 bei einer Einfederbewegung abrollt. Ferner umfasst der Tauchkolben 40 einen unteren, sich quer zur Einfederungsachse 12 erstreckenden Bodenbereich 50 und einen oberen, dem Luftbalg 20 zugewandten, sich ebenfalls quer zur Einfederungsachse 12 erstreckenden Stirnbereich 64. Der Bodenbereich 50 umfasst eine Bodenplatte 44, welche sich vorzugsweise über den gesamten Querschnitt des Tauchkolbens 40 erstreckt und den Tauchkolben 40 verschließt. Vorzugsweise umfasst die Bodenplatte 44 eine Befestigungseinrichtung zum Befestigen des Tauchkolbens 40 an einem Achselement des Fahrzeugs. Der Tauchkolben 40 ist insgesamt als Hohlkörper ausgeführt und umfasst einen inneren Hohlraum, welcher als Kolbeninnenraum 43 bezeichnet ist. Der Kolbeninnenraum 43 wird von dem Bodenbereich 50, insbesondere der Bodenplatte 44, dem Mantelkörper 46 und dem Stirnbereich 64 begrenzt.

Ein dem oberen Anbindungsbereich 22 gegenüberliegendes Ende des Luftbalgs 20 ist an dem Tauchkolben 40, insbesondere an dessen oberem Stirnbereich 64, befestigt. Hierzu umfasst der Balgkörper 24 des Luftbalgs 20 einen wulstförmigen Befestigungsabschnitt 34, welcher mittels einer Befestigungs-, insbesondere Klemmeinrichtung 58, am Tauchkolben 40 festgelegt ist. Der insbesondere ringförmige Befestigungsabschnitt 34 bildet einen Endbereich des Balgkörpers 24 und erstreckt sich, insbesondere ringförmig, um die Einfederungsachse 12. Der Befestigungsabschnitt 34 kann insbesondere als endseitige Verdickung des Balgkörpers 24 ausgebildet sein. Die Befestigungs- oder Klemmeinrichtung 58 umfasst ein mit dem Stirnbereich 64 des Tauchkolbens 40 gekoppeltes, insbesondere plattenförmiges Klemmelement 60. Der Befestigungsabschnitt 34 des Luftbalgs 20 ist zwischen dem Stirnbereich 64 des Tauchkolbens 40 und dem Klemmelement 60 festgeklemmt.

Der Luftbalg 20 liegt in einem betriebsgemäßen Zustand der Luftfeder 10 an dem Mantelkörper 46 beziehungsweise dessen äußerer Mantelfläche 48 an. Ein Betriebszustand ist in Fig. 1 dargestellt. In einem entlasteten Zustand, wenn die Luftfeder 10 - beispielsweise durch Anheben des Fahrzeugs vom Boden - nicht durch das Fahrzeug entlastet ist, zieht der Tauchkolben 40 an dem Luftbalg 20, so dass der Balgkörper 24 nicht mehr an der Abrollfläche des Tauchkolbens 40 anliegt. Der entlastete Zustand ist in Fig. 1 auf der linken Seite strichpunktiert dargestellt.

Zur Belüftung des Innenraums des Luftbalgs 20 ist im Stirnbereich 64 des Tauchkolbens 40, insbesondere im Bereich der zentralen Einfederungsachse 12, ein Ventil 70 vorgesehen, welches in einem geöffneten Zustand eine Strömungsverbindung zwischen dem Balginnenraum 23 und dem Kolbeninnenraum 43 bereitstellt. Das Ventil 70 ist als Einwegeventil ausgestaltet und ermöglicht eine Zufuhr von Luft aus dem Innenraum des Tauchkolbens 40 in den Balginnenraum 23. Am tauchkolbenseitigen Einströmbereich kann eine Filterkammer ausgebildet sein.

In dem Mantelkörper 46 des Tauchkolbens 40 sind mehrere Belüftungsöffnungen 80 ausgebildet. Die Belüftungsöffnungen 80 sind so angeordnet, dass sie im belasteten Zustand der Luftfeder 10, also einem betriebsgemäßen Zustand, von dem an der Mantelfläche 48 anliegenden Luftbalg 20 beziehungsweise Balgkörper 24 überdeckt sind. Die Belüftungsöffnungen 80 sind somit im regulären Betrieb, also im Fahrbetrieb des Fahrzeugs, verschlossen. Auf diese Weise sind die Belüftungsöffnungen 80 sowie auch der Innenraum des Tauchkolbens 40 und das mit diesem in Verbindung stehende Ventil 70 im betriebsgemäßen Zustand der Luftfeder 10 weitgehend vor Verschmutzungen geschützt.

Im entlasteten Zustand der Luftfeder 10, wenn beispielsweise das Fahrzeug von der Bodenfläche abgehoben wird, gibt der Balgkörper 24 die Belüftungsöffnungen 80 frei, so dass diese geöffnet sind. Der entlastete Zustand der Luftfeder 10 kann auch als vollständig ausgefederter Zustand bezeichnet werden.

Es sind mehrere Belüftungsöffnungen 80 in Umfangsrichtung des Tauchkolbens 40 verteilt angeordnet, wobei die Belüftungsöffnungen 80 sich zumindest teilweise an unterschiedlichen Axialabschnitten des Tauchkolbens 40 befinden. In der dargestellten Ausführungsform sind die Belüftungsöffnungen 80 entlang einer spiralförmigen Linie angeordnet, so dass mit zunehmender Ausfederung der Luftfeder 10 zusätzliche Belüftungsfläche freigegeben wird. Dabei können die Belüftungsöffnungen 80 insbesondere einander in Axialrichtung überlappend angeordnet sein, so dass mit zunehmender Ausfederung eine stetige Zunahme der Belüftungsfläche erreicht wird.

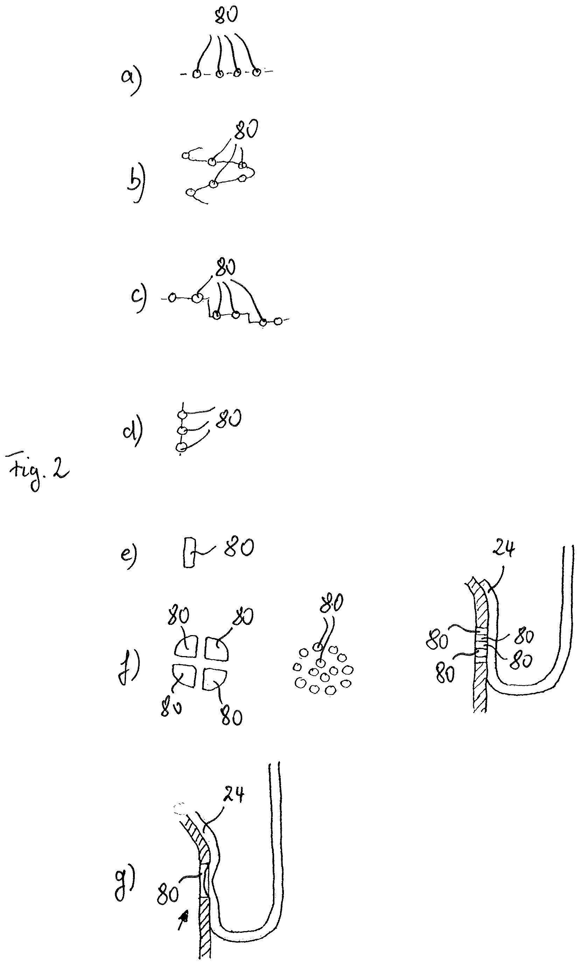

Unterschiedliche Anordnungen der Belüftungsöffnungen 80 in dem Mantelkörper 46 des Tauchkolbens 40 sind in Fig. 2 dargestellt.

Fig. 2a zeigt eine Anordnung der Belüftungsöffnungen 80 in einer quer zur Einfederungsachse 12 verlaufenden Ebene entlang des Mantelkörpers 46. Die Belüftungsöffnungen 80 sind in Umfangsrichtung in einer Ebene senkrecht zur Einfederungsachse 12 angeordnet. Es können auch mehrere Gruppen von jeweils in einer Ebene angeordneten Belüftungsöffnungen 80 vorgesehen sein.

Fig. 2b zeigt eine Ausführungsform, bei welcher die Belüftungsöffnungen 80 - ähnlich der Fig. 1 - spiralförmig um die zentrale Einfederungsachse 12 in dem Mantelkörper 46 des Tauchkolbens 40 angeordnet sind, wobei mehrere Spiralwindungen vorliegen. Durch diese Anordnung werden mit zunehmender Ausfederung der Luftfeder 10, insbesondere kontinuierlich, weitere Belüftungsöffnungen 80 freigegeben. Die Gesamtbelüftungsfläche steigt mit zunehmender Ausfederungsbewegung und sinkt mit zunehmender Einfederungsbewegung. Hierdurch kann eine besonders gezielte Belüftung erreicht werden.

Fig. 2c zeigt eine stufenweise oder stufenförmige Anordnung der Belüftungsöffnungen 80, wobei jeweils mindestens zwei Belüftungsöffnungen 80 in einer quer beziehungsweise senkrecht zur Einfederungsachse 12 verlaufenden Ebene angeordnet sind. Hierbei wird diskontinuierlich mit zunehmender Ausfederungsbewegung eine zusätzliche Belüftungsfläche freigegeben.

Fig. 2d zeigt mehrere Belüftungsöffnungen 80, welche in einem Umfangssegment des Mantelkörpers 46 übereinander angeordnet sind. Durch die in einem definierten Umfangsabschnitt übereinander angeordneten Belüftungsöffnungen 80 lässt sich eine gezielte Belüftung in einer bestimmten radialen Richtung erzeugen.

Fig. 2e zeigt eine längliche Form einer Belüftungsöffnung 80, welche auch als Langloch bezeichnet werden kann. Durch die gestreckte Form der Belüftungsöffnung 80 kann wirksam ein Eindrücken des unter Druck stehenden Luftbalgs 20 in die Belüftungsöffnung 80 verhindert oder verringert werden. Das als Langloch ausgeführte Belüftungsloch 80 umfasst vorzugsweise eine sich in Umfangsrichtung erstreckende Quererstreckung und eine sich in Federrichtung erstreckende Längserstreckung. Grundsätzlich können bei allen Ausführungsformen die Belüftungsöffnungen 80 als Langlöcher ausgebildet sein.

In Fig. 2f sind unterschiedliche Ausführungsformen eines Belüftungsgitters dargestellt. Die rechte Darstellung der Fig. 2f zeigt, dass durch die gitterartigen Belüftungsöffnungen 80 wirksam ein Eindrücken des Luftbalgs 20 in die Öffnungen verhindert werden kann.

In Gegensatz hierzu zeigt Fig. 2g eine Ausführungsform mit einem vergleichweise großen Belüftungsloch 80, in welches sich der unter Druck befindende Balgkörper 24 nach innen eindrückt.

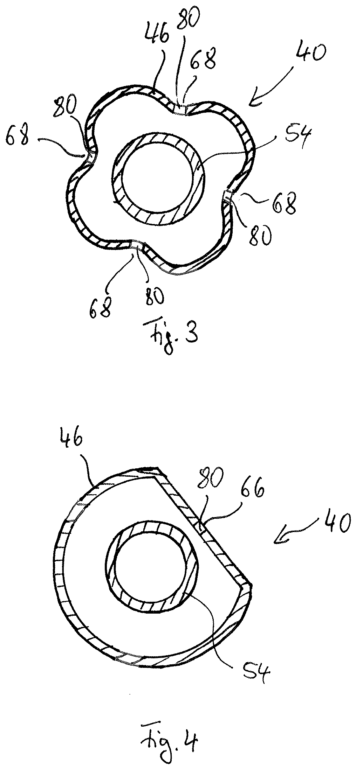

Die Fig. 3 und 4 zeigen Ausführungsformen, bei welchen eine Belüftung des Kolbeninnenraums 43 auch bei einer nicht vollständig ausgefederten Position des Luftbalgs 20 erfolgen kann, wobei gleichwohl ein wirksamer Schutz vor Verschmutzung gewährleistet ist.

Gemäß Fig. 3 umfasst der Mantelkörper 46 des Tauchkolbens 40 sich in Achsrichtung erstreckende Einwölbungen 68, durch welche sich in Achsrichtung erstreckende Kanäle gebildet sind. Die Einwölbungen 68 sind so geformt und an die Steifigkeit des Balgkörpers 24 angepasst, dass sich der Balgkörper 24 im betriebsgemäßen Zustand nicht vollumfänglich an die Mantelfläche 48 des Tauchkolbens 40 anlegt, sondern im Bereich der Einwölbungen 68 von der Mantelfläche 48 absteht. Auf diese Weise kann Luft durch die zwischen der Mantelfläche 48 und dem Balgkörper 24 gebildeten Kanäle strömen. Die Belüftungsöffnungen 80 sind im Bereich der Einwölbungen 68 angeordnet. Damit sind die Belüftungsöffnungen 80 auch in einem zumindest teilweise eingefederten Zustand beziehungsweise in einem betriebsgemäßen, belasteten Zustand der Luftfeder 10 freigegeben.

Fig. 4 zeigt eine Ausführungsform, bei welcher der Mantelkörper 46 eine Abflachung 66 beziehungsweise einen abgeflachten Bereich umfasst. Durch den abgeflachten Bereich bleibt ein Kreissegment des Querschnitts des Mantelkörpers 46 frei beziehungsweise es wird ein Kreissegment ausgespart. Ähnlich zur Ausführungsform gemäß Fig. 3 legt sich der Luftbalg 20 nicht vollständig an die Mantelfläche 48 des Tauchkolben 40 an, so dass im Bereich Abflachung 66 ein Freiraum zwischen dem Balgkörper 24 und der Mantelfläche 48 verbleibt, durch welchen Luft strömen kann. Zur Belüftung des Tauchkolbens 40 ist in dem Bereich der Abflachung 66 mindestens eine Belüftungsöffnung 80 ausgebildet. Grundsätzlich können auch mehrere abgeflachte Bereiche vorgesehen und/oder mehrere Belüftungsöffnungen 80 in einem abgeflachten Bereich des Tauchkolbens 40 angeordnet sein. Der abgeflachte Bereich stellt vorzugsweise eine ebene Außenfläche des Mantelkörpers 46 des Tauchkolbens 40 dar.

Die Einwölbung 68 oder die Abflachung 66 erstreckt sich vorzugsweise nur entlang eines axialen Teilbereichs des Mantelkörpers 46. Abseits der Abflachung 66 oder der Einwölbung 68 ist die Mantelfläche 48 vorzugsweise zylinder- und/oder kegelförmig gestaltet. Auf diese Weise kann eine gute Stabilität des Tauchkolbens 40 erreicht werden. Zur Erhöhung der Stabilität kann ein zentrales, zylinderförmiges und/oder konisches Verstärkungselement 54 vorgesehen sein.

Insgesamt kann durch die erfindungsgemäße Luftfeder und den erfindungsgemäßen Tauchkolben eine gezielte und besonders zuverlässige Belüftung erreicht werden, um, insbesondere beim Anheben eines Fahrzeugs, die Bildung eines Unterdrucks im Inneren des Luftbalgs zu verhindern. Die Anordnung der Belüftungsöffnungen in dem während des Fahrbetriebs geschlossenen Bereich verhindert eine Verschmutzung des Innenraums des Tauchkolbens. Im ausgefederten Zustand sind die Belüftungsöffnungen für eine Luftzufuhr zum Belüftungsventil frei. Durch die erfindungsgemäße Luftfeder und den erfindungsgemäßen Tauchkolben kann somit die Betriebssicherheit einer Luftfedervorrichtung signifikant erhöht werden.

### Bezugszeichenliste

- 10: Luftfeder
- 12: Einfederungsachse
- 20: Luftbalg
- 22: Anbindungsbereich für Fahrzeugrahmen
- 23: Balginnenraum
- 24: Balgkörper
- 26: Deckel
- 28: Druckluftanschluss
- 30: Befestigungselement
- 34: Befestigungsabschnitt
- 40: Tauchkolben
- 42: Anbindungsbereich für Achselement
- 43: Kolbeninnenraum
- 44: Bodenplatte
- 46: Mantelkörper
- 48: Mantelfläche
- 50: Bodenbereich
- 54: Verstärkungselement
- 58: Klemmeinrichtung
- 60: Klemmelement
- 64: Stirnbereich
- 66: Abflachung
- 68: Einwölbung
- 70: Ventil
- 80: Belüftungsöffnungen

## Patentansprüche

1. Luftfeder für ein Fahrzeug, insbesondere für ein Nutzfahrzeug, aufweisend einen Luftbalg (20) mit einem mit Druckluft befüllbaren Balginnenraum (23)
und
einen Tauchkolben (40), welcher mit dem Luftbalg (20) gekoppelt ist und einen Mantelkörper (46) aufweist, welcher eine Abrollfläche für den Luftbalg (20) bildet,
wobei der Tauchkolben (40) als Hohlkörper ausgeführt ist und einen Kolbeninnenraum (43) aufweist,
wobei ein Ventil (70) zum Belüften des Balginnenraums (23) vorgesehen ist, durch welches der Balginnenraum (23) mit dem Kolbeninnenraum (43) verbindbar ist, wobei der Tauchkolben (40) mindestens eine Belüftungsöffnung (80) aufweist, welche in dem Mantelkörper (46) des Tauchkolbens (40) angeordnet ist und über welche der Kolbeninnenraum (43) mit der Umgebung verbindbar ist, **dadurch gekennzeichnet, dass** die mindestens eine Belüftungsöffnung (80) in einem Bereich des Mantelkörpers (46) angeordnet ist, welcher in einem belasteten Zustand der Luftfeder (10) von dem Luftbalg (20) überdeckt ist.

2. Luftfeder nach Anspruch 1,
**dadurch gekennzeichnet,**
**dass** der überdeckte Bereich vorzugsweise mindestens 20% der - in Ein-/Ausfederrichtung gesehenen - Länge des Kolbenmantels entspricht.

3. Luftfeder nach Anspruch 1 oder 2,
**dadurch gekennzeichnet,**
**dass** die mindestens eine Belüftungsöffnung (80) in einem Bereich des Mantelkörpers (46) angeordnet ist, welcher in einem entlasteten Zustand der Luftfeder (10) von dem Luftbalg (20) freigegeben ist.

4. Luftfeder nach einem der Ansprüche 1 - 3,
**dadurch gekennzeichnet,**
**dass** eine Mehrzahl von Belüftungsöffnungen (80) vorgesehen ist, wobei die Belüftungsöffnungen (80) in einer Umfangsrichtung und/oder einer Längsrichtung des Tauchkolbens (40) verteilt angeordnet sind.

5. Luftfeder nach Anspruch 4,
**dadurch gekennzeichnet,**
**dass** die Belüftungsöffnungen (80) in einer Ebene quer zur Längsrichtung und/oder in Längsrichtung übereinander und/oder spiralförmig und/oder stufenweise entlang des Mantelkörpers (46) verteilt angeordnet sind.

6. Luftfeder nach einem der Ansprüche 1 - 5,
**dadurch gekennzeichnet,**
**dass** der Tauchkolben (40) einen oder eine Vielzahl von gitterförmigen Bereich(en) aufweist, durch welche(n) eine Mehrzahl von Belüftungsöffnungen (80) gebildet ist.

7. Luftfeder nach einem der Ansprüche 1 - 6,
**dadurch gekennzeichnet,**
**dass** das Ventil (70) an einem dem Luftbalg (20) zugewandten Ende des Tauchkolbens (40) angeordnet ist.

8. Luftfeder nach einem der Ansprüche 1 - 7,
**dadurch gekennzeichnet,**
**dass** ein dem Luftbalg (20) gegenüberliegendes Ende des Tauchkolbens (40) verschlossen ist.

9. Luftfeder nach einem der Ansprüche 1 - 8,
**dadurch gekennzeichnet,**
**dass** der Mantelkörper (46) zumindest in einem axialen Teilabschnitt eine Abflachung (66) und/oder Einwölbung (68) aufweist.

10. Luftfeder nach einem der Ansprüche 1 - 9, wobei das Ventil (70) als Rückschlagventil ausgebildet ist.

11. Luftfeder nach einem der Ansprüche 1 - 10, wobei die Belüftungsöffnung (80) als Bohrung oder Ausstanzung in dem Mantelkörper (46) des Tauchkolbens (40) ausgeführt ist.

12. Luftfeder nach einem der Ansprüche 1 - 7 oder 9 - 11, wobei ein dem Luftbalg (20) gegenüberliegendes unteres Ende des Tauchkolbens (40) eine Öffnung aufweist.

13. Luftfeder nach einem der Ansprüche 1 - 12, wobei die Mantelaußenfläche des Tauchkolbens (40) zur Ausbildung eines durch die Abflachung (66) und/oder Einwölbung (68) gebildeten Kanals zumindest teilweise konkav geformt ist.

14. Luftfeder nach einem der Ansprüche 1 - 13, wobei im Inneren des Tauchkolbens (40) ein kegel- und/oder zylinderförmiges Verstärkungselement (54) angeordnet ist.

15. Luftfeder nach Anspruch 14, wobei sich das Verstärkungselement (54) um die zentrale Längsachse erstreckt und Durchbrechungen für einen Luftdurchtritt aufweist.

## Claims

1. Air spring for a vehicle, in particular for a commercial vehicle, having an air bellows (20) with a bellows interior space (23) which can be filled with compressed air, and a plunger piston (40) which is coupled to the air bellows (20) and has a skirt body (46) which forms a rolling face for the air bellows (20), the plunger piston (40) being configured as a hollow body and having a piston interior space (43), a valve (70) for ventilating the bellows interior space (23) being provided, by way of which valve (70) the bellows interior space (23) can be connected to the piston interior space (43), the plunger piston (40) having at least one ventilating opening (80) which is arranged in the skirt body (46) of the plunger piston (40) and via which the piston interior space (43) can be connected to the surroundings, **characterized in that** the at least one ventilating opening (80) is arranged in a region of the skirt body (46) which is covered by the air bellows (20) in a loaded state of the air spring (10).

2. Air spring according to Claim 1, **characterized in that** the covered region preferably corresponds to at least 20% of the length of the piston skirt, as viewed in the compression/rebound direction.

3. Air spring according to Claim 1 or 2, **characterized in that** the at least one ventilating opening (80) is arranged in a region of the skirt body (46) which is released by the air bellows (20) in a relieved state of the air spring (10).

4. Air spring according to one of Claims 1 to 3, **characterized in that** a plurality of ventilating openings (80) are provided, the ventilating openings (80) being arranged distributed in a circumferential direction and/or a longitudinal direction of the plunger piston (40).

5. Air spring according to Claim 4, **characterized in that** the ventilating openings (80) are arranged distributed in a plane transversely with respect to the longitudinal direction and/or in the longitudinal direction above one another and/or spirally and/or in a stepped manner along the skirt body (46).

6. Air spring according to one of Claims 1 to 5, **characterized in that** the plunger piston (40) has one or a multiplicity of grid-shaped regions, by way of which a plurality of ventilating openings (80) are formed.

7. Air spring according to one of Claims 1 to 6, **characterized in that** the valve (70) is arranged at an end of the plunger piston (40), which end faces the air bellows (20).

8. Air spring according to one of Claims 1 to 7, **characterized in that** an end of the plunger piston (40), which end lies opposite the air bellows (20), is closed.

9. Air spring according to one of Claims 1 to 8, **characterized in that**, at least in an axial part section, the skirt body (46) has a flattened portion (66) and/or a curved depression (68).

10. Air spring according to one of Claims 1 to 9, the valve (70) being configured as a check valve.

11. Air spring according to one of Claims 1 to 10, the ventilating opening (80) being configured as a bore or a stamped-out portion in the skirt body (46) of the plunger piston (40).

12. Air spring according to one of Claims 1-7 or 9-11, a lower end of the plunger piston (40), which lower end lies opposite the air bellows (20), having an opening.

13. Air spring according to one of Claims 1-12, the skirt outer face of the plunger piston (40) being at least partially concavely shaped in order to configure a duct which is formed by way of the flattened portion (66) and/or curved depression (68).

14. Air spring according to one of Claims 1-13, a conical and/or cylindrical reinforcing element (54) being arranged in the interior of the plunger piston (40).

15. Air spring according to Claim 14, the reinforcing element (54) extending about the central longitudinal axis and having apertures for a passage of air.

## Revendications

1. Ressort pneumatique pour un véhicule, en particulier un véhicule utilitaire, comportant un soufflet pneumatique (20) pourvu d'un volume intérieur de soufflet (23) remplissable avec de l'air comprimé,
et
un piston plongeur (40) couplé au soufflet pneumatique (20) et comprenant un corps enveloppe (46) qui constitue une surface de déroulement pour le soufflet pneumatique (20),
dans lequel
le piston plongeur (40) est réalisé sous forme de corps creux et présente un volume intérieur de piston (43),
il est prévu une valve (70) pour ventiler le volume intérieur de soufflet (23), par laquelle le volume intérieur de soufflet (23) est susceptible d'être mis en communication avec le volume intérieur de piston (43),
le piston plongeur (40) présente au moins une ouverture de ventilation (80) qui est disposée dans le corps enveloppe (46) du piston plongeur (40) et via laquelle le volume intérieur de piston (43) peut être mis en communication avec l'environnement,
**caractérisé en ce que**
ladite au moins une ouverture de ventilation (80) est disposée dans une zone du corps enveloppe (46) qui, dans un état chargé du ressort pneumatique (10), est recouverte par le soufflet pneumatique (20).

2. Ressort pneumatique selon la revendication 1,
**caractérisé en ce que**
la zone recouverte correspond à au moins 20 % de la longueur de l'enveloppe du piston - vu en direction de rétraction/débattement.

3. Ressort pneumatique selon la revendication 1 ou 2,
**caractérisé en ce que**
ladite au moins une ouverture de ventilation (80) est disposée dans une zone du corps enveloppe (46) qui, dans un état déchargé du ressort pneumatique (10), est dégagé par le soufflet pneumatique (20).

4. Ressort pneumatique selon l'une des revendications 1 à 3,
**caractérisé en ce que**
il est prévu une pluralité d'ouvertures de ventilation (80), les ouvertures de ventilation (80) étant disposées en étant réparties en direction périphérique et/ou en direction longitudinale du piston plongeur (40).

5. Ressort pneumatique selon la revendication 4,
**caractérisé en ce que**
les ouvertures de ventilation (80) sont agencées les unes au-dessus des autres dans un plan transversalement à la direction longitudinale et/ou en direction longitudinale et/ou en forme spiralée et/ou sont réparties en étages le long du corps enveloppe (40).

6. Ressort pneumatique selon l'une des revendications 1 à 5,
**caractérisé en ce que**
le piston plongeur (40) comprend une zone ou une pluralité de zones en forme de grille qui constitue(nt) une pluralité d'ouvertures de ventilation (80).

7. Ressort pneumatique selon l'une des revendications 1 à 6,
**caractérisé en ce que**
la valve (70) est agencée à une extrémité du piston plongeur (40) tournée vers le soufflet pneumatique (20).

8. Ressort pneumatique selon l'une des revendications 1 à 7,
**caractérisé en ce que**
une extrémité du piston plongeur (40) opposée au soufflet pneumatique (20) est fermée.

9. Ressort pneumatique selon l'une des revendications 1 à 8,
**caractérisé en ce que**
le corps enveloppe (46) présente un méplat (66) et/ou un bombement (68) au moins dans une portion partielle axiale.

10. Ressort pneumatique selon l'une des revendications 1 à 9,
dans lequel la valve (70) est réalisée sous forme de clapet anti-retour.

11. Ressort pneumatique selon l'une des revendications 1 à 10,
dans lequel l'ouverture de ventilation (80) est réalisée sous forme de perçage ou de poinçonnage dans le corps enveloppe (46) du piston plongeur (40).

12. Ressort pneumatique selon l'une des revendications 1 à 7 ou 9 à 11, dans lequel une extrémité inférieure du piston plongeur (40) opposée au soufflet pneumatique (20) présente une ouverture.

13. Ressort pneumatique selon l'une des revendications 1 à 12,
dans lequel la surface enveloppe extérieure du piston plongeur (40) est de forme au moins partiellement concave pour réaliser un canal formé par le méplat (66) et/ou par le bombement (68).

14. Ressort pneumatique selon l'une des revendications 1 à 13,
dans lequel un élément de renforcement (54) de forme conique et/ou cylindrique est agencé à l'intérieur du piston plongeur (40).

15. Ressort pneumatique selon la revendication 14,
dans lequel l'élément de renforcement (54) s'étend autour de l'axe longitudinal central et présente des traversées pour un passage de l'air.
